# EUROPEAN PATENT APPLICATION

(11) **EP 4 821 770 A1**
(43) Date of publication of application: **14.10.2026**
(21) Application number: 25776823.4
(22) Date of filing: 24.03.2025
(51) Int. Cl.: B60R 19/04

(54) **STRENGTH MEMBER FOR VEHICLES**

(30) Priority: 27.03.2024 JP 2024051543
(71) Applicant: Toyoda Iron Works Co., Ltd., Toyota-shi, Aichi 471-8507 (JP)
(72) Inventor: SEKIGUCHI Hiroki, Toyota-shi, Aichi 471-8507 (JP); NAKANISHI Makoto, Toyota-shi, Aichi 471-8507 (JP)
(74) Representative: Stöckeler, Ferdinand
(86) International application number: PCT/JP2025/011403
(87) International publication number: WO 2025/205579

(57) **Abstract**

One embodiment is a vehicle strength member having a closed section and including a first member 13 and a second member 14 each having a groove-shaped section intersecting a longitudinal direction. Each of the first member 13 and the second member 14 has a bottom portion 13b, 14b, wall portions 13c, 13d, 14c, 14d standing from both side edges of the bottom portion 13b, 14b, and an opening 13a, 14a, and a closed section is formed by combining the first member 13 and the second member 14 such that the openings 13a, 14a thereof face each other. The vehicle strength member includes a first overlapping portion 15 in which the inner surface of one wall portion 13c of the first member 13 and the outer surface of one wall portion 14c of the second member 14 overlap each other in a state of contacting each other, a second overlapping portion 16 in which the outer surface of the other wall portion 13d of the first member 13 and the inner surface of the other wall portion 14d of the second member 14 overlap each other in a state of contacting each other, and at least one joint portion 17, 18 at which the wall portions in the first and second overlapping portions are joined.

## Description

### TECHNICAL FIELD

The technology disclosed in the present application relates to a vehicle strength member.

### BACKGROUND ART

Conventionally, a vehicle body is provided with a structure for receiving a collision load at the time of vehicle collision. For example, a bumper structure provided in a front portion or a rear portion of the vehicle body is provided with a bumper reinforcement that absorbs collision energy as a core material. When the bumper reinforcement has a closed section, the strength thereof is improved. Such a closed section can be formed, for example, by combining two members.

For example, JP-A-2008-037220 discloses, as an example of the bumper reinforcement, a structure in which a steel sheet material is fixed by spot welding to an end position of a steel base member having a hat-shaped section. That is, this bumper reinforcement has a closed section formed by two members.

JP-A-2021-154377 discloses a bumper reinforcement having a closed section formed by joining two members by rivet joining. This bumper reinforcement is rivet-joined at flange portions formed at end portions of the members having a hat-shaped section.

### SUMMARY OF INVENTION

In an aspect in which spot welding or rivet joining is performed outside the closed section as in the bumper reinforcements described in the above two publications, for example, it is necessary to provide the flange portions at the end portions of the two members in order to sandwich a joint position between electrodes from both sides. In this case, while there is an advantage that it is easy to control a gap between the members when assembling the two members, the size of the closed section tends to be limited in order to fit in a design space determined in relation to members around the bumper reinforcement. Therefore, there is room for improvement in the strength and collision energy absorption amount of the vehicle strength member. Therefore, it is desirable to provide a vehicle strength member having a structure with high collision energy absorption efficiency and high member assembly efficiency.

One aspect of the present technology is a vehicle strength member having a closed section, which includes a first member and a second member each having a groove-shaped section intersecting a longitudinal direction, each of the first member and the second member having a bottom portion forming the groove shape, wall portions standing from both side edges of the bottom portion, and an opening on a side opposite to the bottom portion, and the closed section being formed by combining the first member and the second member such that the openings thereof face each other, a first overlapping portion in which the inner surface of one of the wall portions of the first member and the outer surface of one of the wall portions of the second member overlap each other in a state of contacting each other, a second overlapping portion in which the outer surface of the other wall portion of the first member and the inner surface of the other wall portion of the second member overlap each other in a state of contacting each other, and at least one joint portion at which the wall portions contacting each other in the first and second overlapping portions are joined.

In some embodiments, the first member is disposed on a side to which a load is input at a time of collision, and a vertical distance from the joint portion to a plane formed by the bottom portion of the first member is shorter than a vertical distance from the joint portion to a plane formed by the bottom portion of the second member.

In some embodiments, the at least one joint portion in the first and second overlapping portions is a welded portion formed by laser welding.

In some embodiments, the vehicle strength member further includes a concave bead formed in the longitudinal direction at the bottom portion of at least one of the first member or the second member.

In some embodiments, the vehicle strength member further includes a concave bead formed in the longitudinal direction at the bottom portion of each of the first member and the second member.

In some embodiments, the concave bead formed at the bottom portion of the first member and the concave bead formed at the bottom portion of the second member contact each other, and the first member and the second member are joined at the contact portions of the concave beads.

In some embodiments, the vehicle strength member is a bumper reinforcement.

### BRIEF DESCRIPTION OF DRAWINGS

Fig. 1 is a schematic view showing the arrangement position of a bumper device with respect to a vehicle body.
Fig. 2 is a schematic perspective view of a vehicle strength member according to one embodiment.
Fig. 3 is a schematic plan view of the vehicle strength member of Fig. 2.
Fig. 4 is a sectional view of the vehicle strength member of Fig. 3 taken along line IV-IV.
Fig. 5 is a sectional view schematically showing the direction of a set of a first member and a second member.
Fig. 6 is a sectional view schematically showing a step of performing laser joining on first and second overlapping portions.
Fig. 7 is a sectional view of a vehicle strength member according to another embodiment.
Fig. 8 is a sectional view of a vehicle strength member according to still another embodiment.
Fig. 9 is a sectional view of a vehicle strength member in which two members are disposed differently for comparison.

### DESCRIPTION OF EMBODIMENTS

Hereinafter, various embodiments will be described with reference to the drawings.

### <Bumper Reinforcement>

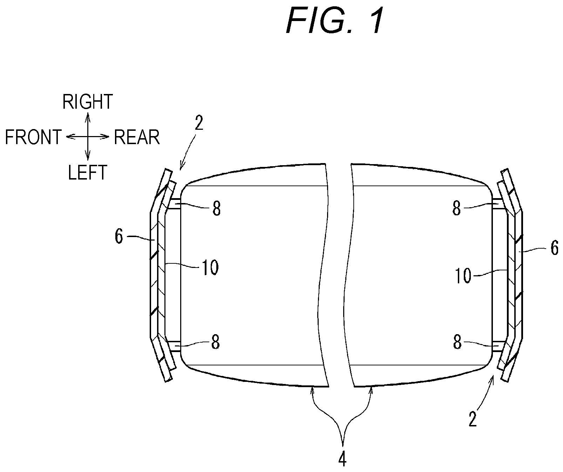

Fig. 1 shows a bumper reinforcement 10 according to one embodiment, which is provided as a core material of a bumper device 2 provided in a front portion or a rear portion of a vehicle body 4 of a vehicle such as an automobile. Note that the front-rear, left-right, and up-down directions in the following description and the drawings are based on a traveling direction of the vehicle.

First, the arrangement and configuration of the vehicle bumper device 2 equipped with the bumper reinforcement 10 which is a vehicle strength member will be described. As shown in Fig. 1, the bumper devices 2 are usually disposed at positions in the front portion and rear portion of the vehicle body 4 in the width direction of the vehicle body 4.

The bumper device 2 includes the elongated bumper reinforcement 10, a bumper covering member 6, and a bumper support structure 8. The bumper reinforcement 10 is designed as a member responsible for the strength of the bumper device 2. On the other hand, the bumper covering member 6 is designed as a member responsible for the appearance of the vehicle, and is disposed so as to cover the front surface of the bumper reinforcement 10.

The bumper support structures 8 are disposed between a frame member (not shown) of the vehicle body 4 and the bumper reinforcement 10 at positions at both side portions of the bumper reinforcement 10 in the longitudinal direction thereof (vehicle body width direction). The bumper support structure 8 transmits a collision load received by the bumper reinforcement 10 to the vehicle body 4, and such a collision load is supported by the vehicle body 4.

The present embodiment will be described by exemplifying the case of the bumper reinforcement 10 disposed in the front portion of the vehicle body 4. The bumper device 2 receives, by the bumper covering member 6, a collision load acting on the center position of the bumper device 2 due to, for example, front collision of the automobile, and supports the collision load by the bumper reinforcement 10. The load acting on the bumper reinforcement 10 is received by the vehicle body 4 via the bumper support structure 8.

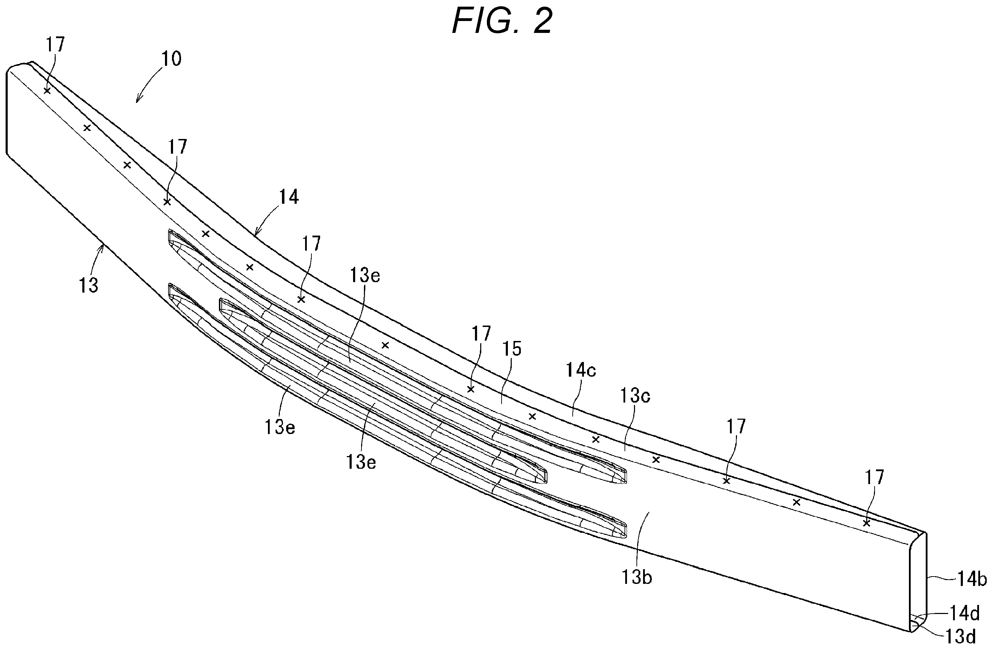

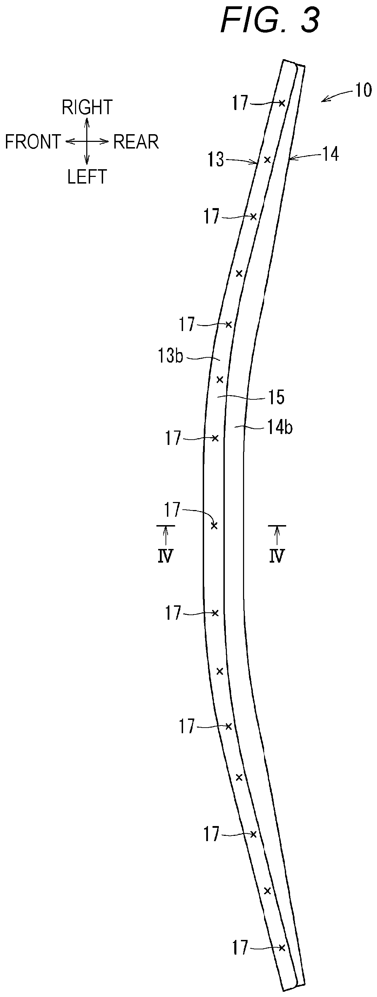

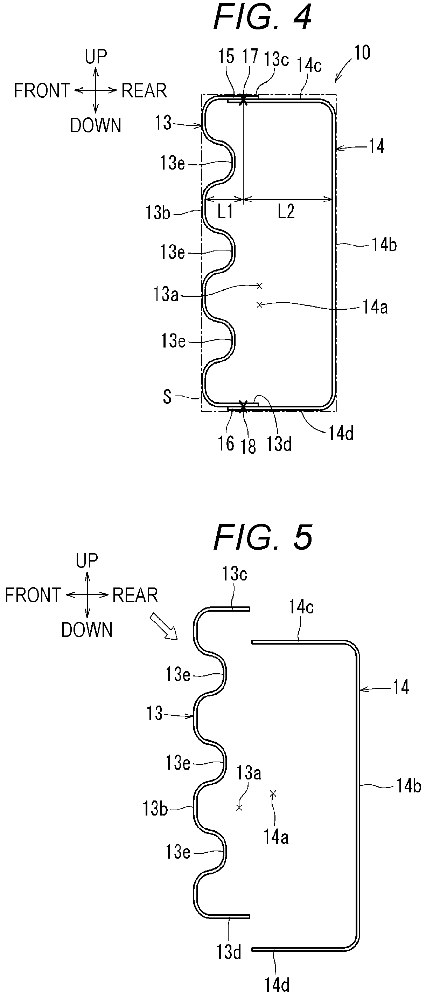

As shown in Figs. 2 and 3, the bumper reinforcement 10 has an elongated shape, is disposed in the width direction of the vehicle body 4, and is formed in a curved shape in which both ends in the longitudinal direction are retracted. The bumper reinforcement 10 includes an elongated first member 13 and an elongated second member 14. The first member 13 and the second member 14 have a groove-shaped section intersecting the longitudinal direction. As shown in Fig. 4, the bumper reinforcement 10 is disposed such that openings 13a, 14a of the first member 13 and the second member 14 face each other, and has a substantially quadrangular closed section in a sectional view intersecting the longitudinal direction. In the present embodiment, the first member 13 is disposed on the outer side in the vehicle body front-rear direction (side to which a load is input at the time of collision), and the second member 14 is disposed on the inner side (opposite side).

As shown in Fig. 4, the first member 13 has a bottom portion 13b forming the groove shape, wall portions 13c, 13d standing from both side edges of the bottom portion 13b, and the opening 13a on the side opposite to the bottom portion 13b. In the present embodiment, the bottom portion 13b is located on the side (vehicle body front side) to which a load is input at the time of collision, and the two wall portions 13c, 13d are located above and below the bottom portion 13b. Here, the "bottom portion" refers to portions of the first member 13 and the second member 14 having the groove-shaped section as "bottom portions" for convenience, and also includes a case where the bottom portion faces in any of the front-rear, left-right, and up-down directions depending on the position where the vehicle strength member is mounted.

As shown in Figs. 2 and 4, the bottom portion 13b is provided with a plurality of concave beads 13e. The concave bead 13e is recessed inward from the outside of the bottom portion 13b in the vehicle body front-rear direction, and is formed along the longitudinal direction at a center portion of the first member 13 (bumper reinforcement 10) in the vehicle body width direction, for example.

As shown in Fig. 4, the second member 14 has a bottom portion 14b forming the groove shape, wall portions 14c, 14d standing from both side edges of the bottom portion 14b, and the opening 14a on the side opposite to the bottom portion 14b. In the present embodiment, the bottom portion 14b is located on the side opposite to the side to which a load is input at the time of collision, and the two wall portions 14c, 14d are located above and below the bottom portion 14b.

In the first member 13 and the second member 14, the dimensions of the upper and lower wall portions 13c, 13d, 14c, 14d in the vehicle body front-rear direction are appropriately set according to the arrangement of joint portions 17, 18 in a first overlapping portion 15 and a second overlapping portion 16 (described later).

The bumper reinforcement 10 is disposed such that the upper and lower wall portions 13c, 13d of the first member 13 and the upper and lower wall portions 14c, 14d of the second member 14 overlap each other. In the present embodiment, a portion where the upper wall portions 13c, 14c overlap each other will be referred to as a first overlapping portion 15, and a portion where the lower wall portions 13d, 14d overlap each other will be referred to as a second overlapping portion 16. In the first overlapping portion 15, the inner surface of the upper wall portion 13c of the first member 13 and the outer surface of the upper wall portion 14c of the second member 14 overlap each other in a state of contacting each other. That is, the upper wall portion 13c of the first member 13 is located outside the closed section, and the upper wall portion 14c of the second member 14 is located inside the closed section. On the other hand, in the second overlapping portion 16, the outer surface of the lower wall portion 13d of the first member 13 and the inner surface of the lower wall portion 14d of the second member 14 overlap each other in a state of contacting each other. That is, the lower wall portion 13d of the first member 13 is located inside the closed section, and the lower wall portion 14d of the second member 14 is located outside the closed section.

The bumper reinforcement 10 has the plurality of joint portions 17, 18 in each of the first and second overlapping portions 15, 16. Specifically, as shown in Figs. 2 and 4, the contacting upper wall portions 13c, 14c are joined at a plurality of positions along the longitudinal direction of the first overlapping portion 15, and the contacting lower wall portions 13d, 14d are joined at a plurality of positions along the longitudinal direction of the second overlapping portion 16. The joint portions 17, 18 can be point-like welded portions formed by laser screw welding (LSW), for example. Note that although the positions of the joint portions 17, 18 are indicated by cross marks in the figure, any number of joint portions 17, 18 can be disposed at any positions of the first overlapping portions 15, 16, respectively, and the cross marks do not specify the number or positions of the joint portions 17, 18. The joint portions 17, 18 may be formed by other types of laser welding, arc welding, or the like.

As shown in Fig. 4, each of the joint portions 17, 18 is disposed so as to be closer to the side to which a load is input at the time of collision in a sectional view intersecting the longitudinal direction of the bumper reinforcement 10. That is, the positions of the joint portions 17, 18 are set such that a vertical distance L1 from the joint portions 17, 18 to a plane formed by the bottom portion 13b (portion with no concave bead 13e) of the first member 13 is shorter than a vertical distance L2 from the joint portions 17, 18 to a plane formed by the bottom portion 14b of the second member 14. Note that the vertical distance L1 from the joint portions 17, 18 to the bottom portion 13b is a vertical distance from the joint portions 17, 18 to the outermost surface of the bottom portion 13b.

### <Method for Manufacturing Bumper Reinforcement>

Next, a process of manufacturing the bumper reinforcement 10 described above will be described. The first member 13 and the second member 14 forming the bumper reinforcement 10 are formed by, for example, press-molding a metal member such as a steel plate in a molding step. As shown in Figs. 3 and 4, the first member 13 has the elongated shape and the groove-shaped section intersecting the longitudinal direction, and has the bottom portion 13b, the wall portions 13c, 13d standing from both side edges of the bottom portion 13b, and the opening 13a on the side opposite to the bottom portion 13b. The bottom portion 13b is formed with the plurality of concave beads 13e. The second member 14 has the elongated shape and the groove-shaped section intersecting the longitudinal direction, and has the bottom portion 14b, the wall portions 14c, 14d standing from both side edges of the bottom portion 14b, and the opening 14a on the side opposite to the bottom portion 14b.

As shown in Fig. 5, the first member 13 and the second member 14 press-molded in the molding step are combined such that the openings 13a, 14a thereof face each other in an assembling step. For example, the first member 13 is combined with the second member 14 aligned by a jig or the like obliquely from the upper side. As a result, the closed section having the substantially quadrangular shape is formed in a sectional view intersecting the longitudinal direction of the bumper reinforcement 10. In the first overlapping portion 15, the upper wall portion 13c of the first member 13 is located outside the closed section, and the upper wall portion 14c of the second member 14 is located inside the closed section. On the other hand, in the second overlapping portion 16, the lower wall portion 13d of the first member 13 is located inside the closed section, and the lower wall portion 14d of the second member 14 is located outside the closed section.

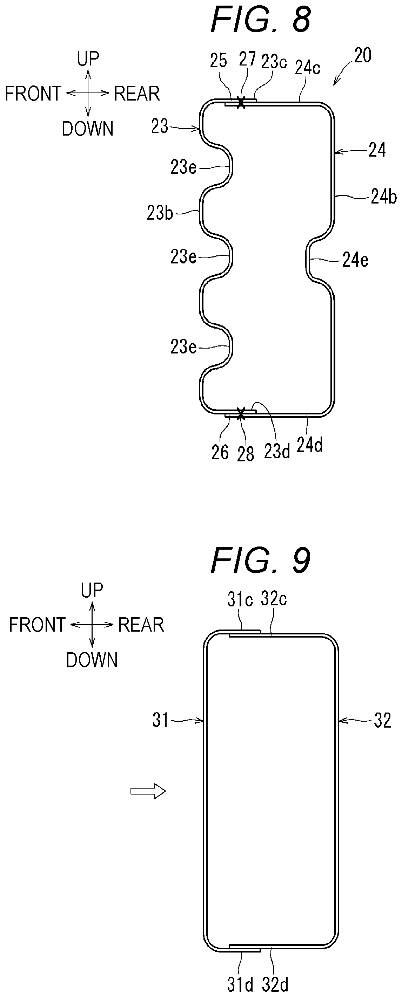

Here, as shown in Fig. 9, for example, in a case where two members 31, 32 are disposed such that both wall portions 32c, 32d of one member 32 of the vehicle strength member are located inside the other member 31, in a sectional view intersecting the longitudinal direction, a dimension between the upper wall portion 31c and lower wall portion 31d of the other member 31 is larger than a dimension between the upper wall portion 32c and lower wall portion 32d of the one member 32, and the two members 31, 32 have different dimensions. When these members 31, 32 are joined by laser joining or the like, the dimensional accuracy of the members is further limited. Specifically, in a case where a plate gap between the two members 31, 32 is large, there is a possibility that favorable welding quality cannot be obtained at a joint position, and in a case where the plate gap is too narrow, there is an increased possibility that the wall portions interfere with each other when the two members 31, 32 are combined.

As shown in Figs. 4 and 5, the bumper reinforcement 10 according to the present embodiment has a configuration in which the two members 13, 14 are combined such that the wall portions 13c, 13d of the first member 13 and the wall portions 14c, 14d of the second member 14 are alternately located. As a result, in a sectional view intersecting the longitudinal direction of the bumper reinforcement 10, a dimension between the upper wall portion 13c and lower wall portion 13d of the first member 13 and a dimension between the upper wall portion 14c and lower wall portion 14d of the second member 14 can be made the same, and the first member 13 can be set obliquely with respect to the second member 14. Thus, the limitations on the dimensional accuracy and assembly accuracy of the members are alleviated, and accuracy control is facilitated.

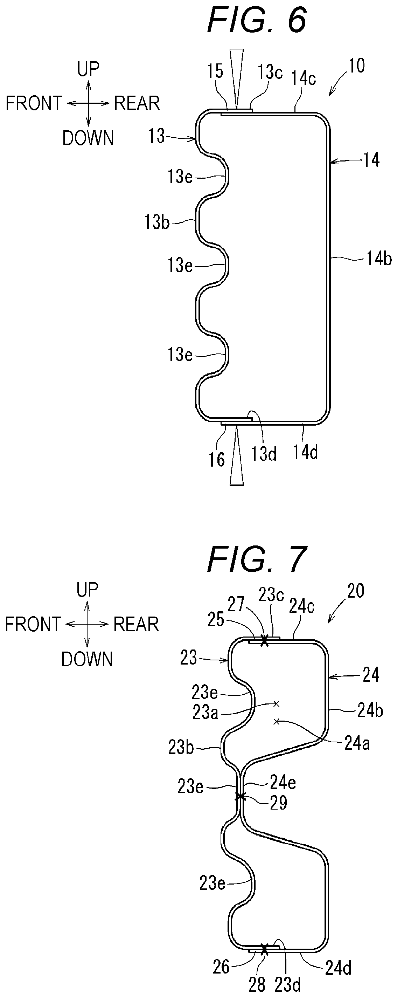

As shown in Fig. 6, in a joining step, the first member 13 and the second member 14 are spot-welded and integrated at any positions in each of the first and second overlapping portions 15, 16. For example, laser screw welding is used for spot welding. Laser screw welding is welding using laser irradiation for heating a member, and heating is performed only from one side. In addition, laser screw welding can perform joining in a shorter heating time and a shorter welding pitch as compared with spot welding. That is, by using LSW welding, more spot welds can be made, and the joint portions 17, 18 can be joined with no gap, so that the rigidity of the bumper reinforcement 10 is improved. In addition, since welding can be performed at a higher speed, production efficiency is improved.

### <Advantageous Effects>

Next, advantageous effects of the above-described embodiment will be described.

According to the present embodiment, the bumper reinforcement 10 (vehicle strength member) has the closed section formed by the first member 13 and the second member 14 having the groove-shaped sections intersecting the longitudinal direction. As a result, a closed section with no flange portion on the outside is formed in a sectional view taken along the longitudinal direction of the bumper reinforcement 10. That is, the bumper reinforcement 10 having the closed section fully utilizing a design space S is formed. Therefore, the strength of the bumper reinforcement 10 is improved, and the energy absorption efficiency thereof is also improved.

The bumper reinforcement 10 according to the present embodiment is disposed such that the wall portions 13c, 13d of the first member 13 and the wall portions 14c, 14d of the second member 14 alternately overlap each other in the up-down direction. As a result, it is possible to prevent interference between the members when the first member 13 and the second member 14 are combined, and it is easy to control the dimensional accuracy and the assembly accuracy. That is, even in a case where LSW welding, other types of laser welding, or the like, in which an access is made from one side at a joint position, is selected, it is easy to align the two members 13, 14. Therefore, the assembly efficiency of the members is improved.

In the present embodiment, in a sectional view intersecting the longitudinal direction of the bumper reinforcement 10, the first member 13 is disposed on the side to which a load is input at the time of collision of the vehicle body 4 (for example, outside the center in the vehicle body front-rear direction), and the joint positions are set such that the vertical distance L1 from the joint portions 17, 18 to the plane formed by the bottom portion 13b (portion with no concave bead 13e) of the first member 13 is shorter than the vertical distance L2 from the joint portions 17, 18 to the plane formed by the bottom portion 14b of the second member 14. That is, the joint portions 17, 18 in the first and second overlapping portions 15, 16 are disposed at the positions closer to the side to which a load is input at the time of collision. Since the joint portions 17, 18 are joined in a state in which the wall portions 13c, 13d, 14c, 14d overlap each other in the thickness direction, the joint portions 17, 18 have higher strength. The high-strength portions are located on the side to which a load is input at the time of collision with respect to the center of the bumper reinforcement 10 in the vehicle body front-rear direction, whereby rigidity against deformation and compression is improved. That is, the collision load of the bumper reinforcement 10 is increased, and the energy absorption efficiency thereof is improved.

In the present embodiment, in each of the first and second overlapping portions 15, 16, the joint portions 17, 18 spot-welded using laser screw welding are disposed. LSW welding can join the overlapping members by laser irradiation from only one side, and therefore, can be applied to the bumper reinforcement 10 in which the flange portion is not provided outside the closed section formed by the first member 13 and the second member 14. That is, LSW welding is suitable for the configuration of the closed section fully utilizing the design space S of the bumper reinforcement 10.

The first member 13 of the bumper reinforcement 10 according to the present embodiment is provided with the concave beads 13e formed in the longitudinal direction. By providing the concave beads 13e in the first member 13 disposed on the side to which a load is input at the time of collision, the rigidity and the strength against deformation, compression, and the like are improved. That is, the rigidity and strength of the bumper reinforcement 10 are improved.

### <Concave bead of Bottom Portion of Second Member>

As shown in Fig. 7, as another embodiment, a bottom portion 24b of a second member 24 can be provided with a concave bead 24e. A bumper reinforcement 20 has a first member 23 and the second member 24, which have an elongated shape and have a groove-shaped section intersecting the longitudinal direction. The first member 23 and the second member 24 disposed such that openings 23a, 24a thereof face each other form a closed section.

The first member 23 has a bottom portion 23b, upper and lower wall portions 23c, 23d, and the opening 23a. The bottom portion 23b is provided with a plurality of concave beads 23e. The concave bead 23e is formed along the longitudinal direction at a center portion of the first member 23 in the vehicle body width direction, for example. The second member 24 has the bottom portion 24b, upper and lower wall portions 24c, 24d, and the opening 24a. The bottom portion 24b is provided with the concave bead 24e. The concave bead 24e is formed along the longitudinal direction at a center portion of the second member 24 in the vehicle body width direction, for example, and the center of the bottom portion 24b in the up-down direction is recessed toward the opening 24a. In the portion where the concave bead 24e is formed, the closed section of the bumper reinforcement 20 has a B-shape.

The bumper reinforcement 20 has a first overlapping portion 25 and a second overlapping portion 26. In the first overlapping portion 25, the inner surface of the upper wall portion 23c of the first member 23 and the outer surface of the upper wall portion 24c of the second member 24 overlap each other in a state of contacting each other. In the second overlapping portion 26, the outer surface of the lower wall portion 23d of the first member 23 and the inner surface of the lower wall portion 24d of the second member 24 overlap each other in a state of contacting each other. Then, the first member 23 and the second member 24 are spot-welded and integrated at any positions in each of the first and second overlapping portions 25, 26. For example, laser screw welding is used for spot welding.

In the bumper reinforcement 20, the concave bead 23e located at the center in the up-down direction among the concave beads 23e formed at the bottom portion 23b (first member 23) contacts the concave bead 24e formed at the bottom portion 24b (second member 24). The contact surfaces (contact portions) of these concave beads 23e, 24e are wider in order to facilitate welding or the like. The contact surfaces of the concave beads 23e, 24e are joined by, for example, LSW welding to form a joint portion 29. The contact surface between the concave bead 23e of the first member 23 and 24e of the second member 24 may be joined by other types of laser welding, spot welding, or the like.

As shown in Fig. 8, as still another embodiment, the bumper reinforcement 20 may have a configuration in which the concave bead 24e formed in the second member 24 is made shallow so as not to contact the concave bead 23e of the first member 23.

### <Advantageous Effects>

The bumper reinforcement 20 according to the above-described embodiment has the following advantageous effects in addition to the advantageous effects of the above-described embodiments of Figs. 4 to 6.

The bottom portions 23b, 24b of the first member 23 and the second member 24 are formed with the concave beads 23e, 24e, respectively, in the longitudinal direction of bumper reinforcement 20. This improves the rigidity and strength of the bumper reinforcement 20. Further, the concave bead 23e formed at the bottom portion 23b of the first member 23 and the concave bead 23e formed at the bottom portion 24b of the second member 24 contact each other, and the first member 23 and the second member 24 are joined at the contact portions of the concave beads 23e, 24e to form the joint portion 29. This further improves the rigidity and strength of the bumper reinforcement 20.

### <Other Embodiments>

The various features described above can be applied not only to the bumper reinforcement but also to other vehicle strength members, such as a center pillar, as other embodiments.

As various embodiments, the positions and shapes of the concave beads 13e, 23e formed in the first members 13, 23 or the concave beads 24e formed in the second member 24 can be appropriately changed.

As another embodiment, the bumper reinforcement 10, 20 (vehicle strength member) may have a configuration in which the arrangement of the first member 13, 23 and the second member 14, 24 overlapping each other may be switched from those in the above-described embodiments. For example, the second member 14, 24 may be combined with the first member 13, 23 obliquely from above.

As another embodiment, as the joining method in the first and second overlapping portions 15, 16, 25, 26, joining by arc welding may be selected instead of laser welding.

### <Advantageous Effects of Embodiments>

Finally, the advantageous effects of the above-described embodiments will be summarized.

In the above embodiments, the two elongated members having the groove-shaped section intersecting the longitudinal direction are combined in a state in which the openings thereof face each other. As a result, the closed section with no flange portion on the outside is formed in a sectional view taken along the longitudinal direction of the vehicle strength member. That is, the vehicle strength member having the closed section fully utilizing the design space for the members is formed. Therefore, the strength of the vehicle strength member is improved, and the energy absorption efficiency thereof is improved. Furthermore, the wall portions of the first member and the second member are alternately disposed so as to overlap each other. As a result, it is possible to prevent interference between the members when the first member and the second member are combined, and it is easy to control the dimensional accuracy and the assembly accuracy. That is, even in a case where a joining method of performing welding or the like from one side at a joint position is selected, it is easy to align the two members. Therefore, the assembly efficiency of the members is improved.

In some embodiments, the first member is disposed on the side to which a load is input at the time of collision, and the joint position is set such that the vertical distance from the joint portion to the plane formed by the bottom portion of the first member is shorter than the vertical distance from the joint portion to the plane formed by the bottom portion of the second member. That is, the joint portions in the first and second overlapping portions are disposed at the positions closer to the side to which a load is input at the time of collision. Since the joint portions for joining the wall portions are portions having high strength, the rigidity against deformation, compression, and the like is improved by adopting the arrangement in which the joint portions are located on the side to which a load is input at the time of collision. Therefore, the collision load is increased, and the energy absorption efficiency is improved.

In some embodiments, the joint portions in the first and second overlapping portions are welded portions formed by laser welding. That is, since welding is performed from one side (outside) of the first member and the second member overlapping each other, it is suitable for a vehicle strength member having no flange portion protruding outward from a wall portion forming a closed section.

In some embodiments, the concave bead is formed in the longitudinal direction of the vehicle strength member at the bottom portion of at least one of the first member or the second member. As a result, the rigidity and strength of the vehicle strength member are improved.

In some embodiments, the concave bead is formed in the longitudinal direction of the vehicle strength member at the bottom portion of each of the first member and the second member. As a result, the rigidity and strength of the vehicle strength member are improved.

In some embodiments, the concave bead formed at the bottom portion of the first member and the concave bead formed at the bottom portion of the second member contact each other, and the first member and the second member are joined at the contact portions of the concave beads. As a result, the rigidity and strength of the vehicle strength member are further improved.

In some embodiments, the vehicle strength member is the bumper reinforcement. Therefore, it is possible to provide a bumper reinforcement having higher rigidity and strength and capable of efficiently absorbing energy.

### <Other Embodiments>

The specific embodiments have been described above. However, the present technology is not limited to these embodiments, and those skilled in the art can make various substitutions, changes, and improvements.

## Claims

1. A vehicle strength member having a closed section, comprising:
a first member and a second member each having a groove-shaped section intersecting a longitudinal direction,
each of the first member and the second member having a bottom portion, wall portions standing from both side edges of the bottom portion, and an opening on a side opposite to the bottom portion, and the closed section being formed by combining the first member and the second member such that the openings thereof face each other;
a first overlapping portion in which an inner surface of one of the wall portions of the first member and an outer surface of one of the wall portions of the second member overlap each other in a state of contacting each other;
a second overlapping portion in which an outer surface of the other wall portion of the first member and an inner surface of the other wall portion of the second member overlap each other in a state of contacting each other; and
at least one joint portion at which the wall portions contacting each other in the first and second overlapping portions are joined.

2. The vehicle strength member according to claim 1, wherein
the first member is disposed on a side to which a load is input at a time of collision, and a vertical distance from the joint portion to a plane formed by the bottom portion of the first member is shorter than a vertical distance from the joint portion to a plane formed by the bottom portion of the second member.

3. The vehicle strength member according to claim 1 or 2, wherein
the at least one joint portion in the first and second overlapping portions is a welded portion formed by laser welding.

4. The vehicle strength member according to any one of claims 1 to 3, further comprising:
a concave bead formed in the longitudinal direction at the bottom portion of at least one of the first member or the second member.

5. The vehicle strength member according to claim 4, further comprising:
a concave bead formed in the longitudinal direction at the bottom portion of each of the first member and the second member.

6. The vehicle strength member according to claim 5, wherein
the concave bead formed at the bottom portion of the first member and the concave bead formed at the bottom portion of the second member contact each other, and the first member and the second member are joined at contact portions of the concave beads.

7. The vehicle strength member according to any one of claims 1 to 6, wherein
the vehicle strength member is a bumper reinforcement.
